(19) Europäisches Patentamt
European Patent Office
Office européen des brevets

(11) Publication number: **0 171 049**
**A2**

(12) **EUROPEAN PATENT APPLICATION**

(21) Application number: 85109780.8

(22) Date of filing: 03.08.85

(51) Int. Cl.⁴: C 02 F 5/14

(30) Priority: 06.08.84 US 638155

(43) Date of publication of application: 12.02.86 Bulletin 86/7

(84) Designated Contracting States: BE CH DE FR GB LI NL

(71) Applicant: The B.F. GOODRICH Company, Dept. 0015 WHB-6 500 South Main Street, Akron, Ohio 44318 (US)

(72) Inventor: Amjad, Zahid, 32611 Redwood Road, Avon Lake Ohio 44012 (US)

(74) Representative: von Kreisler, Alek, Dipl.-Chem. et al, Deichmannhaus am Hauptbahnhof, D-5000 Köln 1 (DE)

(54) **Calcium sulfate inhibition.**

(57) Aqueous systems that have a predominant problem with calcium sulfate scaling are treated with an effective amount of a low molecular weight polyacrylic acid or its salt and a phosphonoalkane carboxylic acid to inhibit said scaling.

# CALCIUM SULFATE INHIBITION

## BACKGROUND OF THE INVENTION

This invention relates to the use of a polyacrylate and a phosphonocarboxylic acid to inhibit formation of calcium sulfate scale in water systems where precipitation of calcium sulfate is the predominant problem. Specific applications contemplated herein include desalination such as reverse osmosis and flash distillation, petroleum industry, pulp digesters, phosphoric acid production, and sugar evaporators.

Scale-forming salts can be prevented from precipitating by complexing the cations with chelating or sequestering agents so that the solubility of the reaction products is not exceeded. Generally, this requires stoichiometric amounts of chelating or sequestering agent with respect to the scale-forming cation, which amounts are not always desirable or economical.

More than 25 years ago, it was discovered that certain inorganic polyphosphates would prevent such precipitation when added in amounts far less than the concentrations needed for sequestering or chelating. When a precipitation inhibitor is present in a potentially scale-forming system at a markedly lower concentration than that required for sequestering the scale-forming cation, it is said to be present in a "threshold" amount. Threshold inhibition describes the phenomenon whereby a substoichiometric amount of a scale inhibitor can stabilize a solution from precipitation which solution can contain hundreds or thousands of parts of scale-forming ions. Threshold inhibition generally takes place under conditions where a few, i.e, 1 to 10 ppm, of a polymeric inhibitor will stabilize in solution from about 100 to several

thousand ppm of a scale-forming mineral.

As already discussed above, whereas threshold inhibition occurs at substoichiometric ratios of inhibitor to scale-forming cation, sequestration requires a stoichiometric ratio of sequestrant to scale-forming cation to maintain that cation in solution. Generally, sequestering takes place at a weight ratio of threshold active compound to scale-forming cation components of greater than about ten to one, depending on the anion components in the water. Threshold inhibition, however, generally takes place at a weight ratio of threshold active compound to scale forming cation components of less than about 0.5 to 1.0. For example, a calcium sulfate solution containing 1820 ppm of calcium ions and 4440 ppm of sulfate ions is thermodynamically unstable. Unless a scale inhibitor is added, precipitation in such a system will take place within about one-half hour. To control precipitation of calcium sulfate from the supersaturated solution, the following two approaches are available:

(a) to complex or sequester calcium ions with a complexing agent such as ethylenediamine tetraacetic acid (EDTA) or nitrilotriacetic acid (NTA). Amount of each required to completely complex calcium ions would be stoichiometric, i.e, 1:1 ratio of Ca:EDTA or about 13300 ppm of EDTA to sequester 1820 ppm of calcium;

(b) on a threshold basis, one would need a substoichiometric amount of about 2 ppm of a polyacrylate to completely inhibit precipitation of calcium sulfate.

Therefore, on the basis of the above discussion, the tremendous difference between sequestration and threshold inhibition reflects the obvious advantages of the latter over the former.

Canadian patent 1,081,604 to Nass et al,

describes scale control in recirculating cooling towers operating with zero blowdown which is achieved by maintaining a certain level of a scale inhibitor in the cooling tower water and softening and returning a sidestream to the cooling tower water. At middle of p. 9 of this patent, a list of preferred scale inhibiting materials is given which includes phosphono tri-carboxylic acids as well as amino phosphonic acids, diphosphonic acids, polyphosphoric acids, polyol phosphate esters, amino phosphonates, maleic anhydride copolymers, and acrylic polymers. Although this patent is not specific in stating the particular mineral material against which the noted scale inhibitors are effective, it appears that the objective is the control of calcium carbonate scaling. This conclusion is based, inter alia, on statements appearing at bottom of p. 8 and top of p. 9 of the patent.

Canadian patent 1,117,395 to Dubin et al, pertains to scale prevention in industrial cooling waters using a phosphonocarboxylic acid and a polymer of acrylic acid. This patent is expressly directed to a composition for inhibiting the deposition of scale and sludge on the heat transfer surfaces of cooling water systems. This patent discusses scaling problems in recirculating cooling tower water systems where calcium carbonate scaling is the primary problem. Based on the disclosure and the data presented, this patent shows effectiveness of the composition against calcium carbonate scaling and there is no reason to assume that such a composition would be effective in applications where calcium sulfate scaling is the dominant problem. Furthermore, there is evidence to support the conclusion that effectiveness against calcium carbonate scaling implies relative ineffectiveness against calcium sulfate scaling.

## SUMMARY OF THE INVENTION

This invention is directed to a method for inhibiting the precipitation of calcium sulfate scale in aqueous systems where such a problem predominates, as in desalination specifically, reverse osmosis and flash distillation. This is accomplished by adding to the aqueous system, which can be acidic or alkaline, about 1 to 200 ppm of a phosphonocarboxylic acid and a polymer of an acrylic acid or its salt having molecular weight (Mw) in the range of about 500 to 100,000.

## DETAILED DESCRIPTION OF THE INVENTION

This invention relates to a method for dispersing and maintaining dispersed particulate matter in an aqueous medium containing such matter and/or for controlling the deposition of scale-imparting precipitates on surfaces of equipment used in water systems containing such precipitates, or precipitate-forming ions, under conditions which form the precipitates. The method comprises the step of adding to preferably neutral or alkaline water a small amount, i.e., in the range of about 1 part per million (ppm) to 200 ppm of a scale inhibition composition defined herein to inhibit deposition of the calcium sulfate precipitates.

The invention described herein is particularly directed to threshold inhibition in typical water systems containing large amounts of calcium sulfate or where calcium sulfate precipitation is of a particular concern. However, water systems which contain concentrations of ions far in excess of typical water systems may also be effectively treated for scale inhibition with the scale inhibition composition of our invention in concentrations of about 1 ppm to 200 ppm, and in some instances as high as 500 ppm, where the cost is justified. Such other water systems include brine solutions such as are processed in desalination

plants, particularly in the multiple evaporators thereof; and in brackish waters containing a high concentration of salts such as are typically encountered in membrane devices for reverse osmosis processes. Still other water uses are in various oil field applications in conduits circulating saline and oily water where the water is present in a major amount by weight, most particularly in secondary oil recovery operations.

The prior art has demonstrated effectiveness of certain scale inhibiting compositions for inhibiting precipitation of calcium carbonate. These compositions include a phosphonocarboxylic acid and a polyacrylic acid or its salt. Effectiveness of a scale inhibiting composition against calcium carbonate scale does not translate into effectiveness against calcium sulfate scale. In fact, the evidence supports a contrary conclusion, i.e., that effectiveness against calcium carbonate scaling means relative ineffectiveness against calcium sulfate scaling. For instance, U.S. patent 4,126,549 to Jones et al, describes scale and corrosion inhibition by adding to a water system a hydrolyzed terpolymer of maleic anhydride, vinyl acetate, and ethyl acrylate. Similar materials were tested for their effectiveness to inhibit scaling of calcium carbonate and calcium sulfate. Based on results given in this patent, it does not appear possible for one skilled in the art to estimate effectiveness against calcium sulfate based on effectiveness of the material against calcium carbonate. For instance, at top of col. 8 of the patent, it is stated that homopolymaleic acid had high activity toward calcium carbonate but no activity towards calcium sulfate. With respect to another material, at bottom of col. 8 of the patent it is stated that the maleic acid/acrylic acid copolymers had

high calcium carbonate activity and slight activity toward calcium sulfate. Same or similar results were indicated for many other materials although some of the tested materials showed good activity toward calcium sulfate. Results of the score of tests are summarized at bottom of col. 16 of this patent which does not provide correlation between activity of a material against calcium carbonate and calcium sulfate.

Same conclusion can be reached examining inhibition activity of a polyacrylic acid and phytic acid against calcium carbonate and calcium sulfate.

In accordance with this invention, a scale inhibition composition containing a phosphonocarboxylic acid and a polyacrylic acid or its salt is added to a water system to inhibit precipitation of calcium sulfate scale. Particular applications where calcium sulfate scaling can be a serious problem include desalination, as in reverse osmosis and flash distillation, oil field applications, and others. Reverse osmosis systems are normally operated at about neutral pH range of 7 to 7.5 where calcium carbonate is not a major problem. Flash distillation systems have a more alkaline pH where magnesium hydroxide and calcium carbonate would also give a scaling problem along with calcium sulfate. Relative amount of the active materials can vary from about 0.05 part by weight to about 10 parts by weight of the polyacrylic acid or its salt per 1 part by weight of the phosphonocarboxylic acid. In a preferred embodiment of this invention, relative amount, on weight basis, of the active materials is in the range of about 0.1 to 5 weight parts of polyacrylic acid or its salt per 1 weight part of phosphonocarboxylic acid. Total amount of both materials added to a water system can vary from about 0.5 to 200 ppm, preferably about 1 to 10 ppm.

The invention disclosed herein provides surprising results since at low levels, the phosphonocarboxylic acids tested alone did not inhibit calcium sulfate scale formation to any significant effect and polyacrylic acids and salts thereof showed only moderate activity against calcium sulfate scale when tested alone at low levels. When phosphonocarboxylic acid was used in combination with one of the polyacrylic acids or a salt thereof, the results were unexpected, showing presence of synergism.

In the preparation of acrylic acids, although acrylic acid monomer itself is preferred, other monounsaturated monocarboxylic acids containing 3 to 4 carbon atoms are also suitable. Specific examples of other suitable acids include methacrylic acid and crotonic acids, which can be copolymerized with the acrylic acid. Especially preferred copolymers in this connection are copolymers of acrylic acid and methacrylic acid where there is a predominant proportion of acrylic acid. While it is preferred to use homopolymers of acrylic acid or the other acids, it is contemplated that the acid monomer may be copolymerized with up to as much as 35 weight percent, preferably up to 10 weight percent, of other water-soluble vinyl monomers such as acrylamide, methacrylamide, styrene sulphonic acid and the like. Also, up to 35% and preferably up to 10% of acrylate esters, such as methyl acrylate or ethyl methacrylate, may be copolymerized with the acid monomers.

Since polymeric species of acrylic acid are limited in their water-solubility, it is preferred that the polymers be used in the form of their water-soluble salts such as the sodium, potassium, ammonia or amine salts. Generally, the polymers can be neutralized with a strong alkali, such as sodium hydroxide, in which instance, the hydrogen atom of the carboxyl group of

the acid units will be replaced with a sodium atom. With the use of an amine neutralizing agent, the hydrogen will be replaced with an ammonium group. Useful polymers include polymers that are unneutralized, partially neutralized, and completely neutralized.

The acid monomers can be polymerized, if desired, in a conventional manner but they are commercially available and therefore, can be purchased. Polymerization of the monomers results in an essentially non-crosslinked random polymer, the molecular weight of which can be adjusted with a little trial and error. The polymer is preferably formed in a high yield ranging from about 50 to 99% by weight of the monomers.

It is also desirable that the polymer be soluble in water. Although, typically, the scale inhibition composition will be added to water at a level of about 0.5 to 200 ppm on dry basis, the polyacrylic acid or its salt is generally shipped in drums as a concentrated aqueous solution containing about 20 to 50% by weight of solids per 100 parts of solution. It is this latter consideration that makes it desirable to have a highly water-soluble polyacrylic acid or its salt to facilitate shipment thereof.

Polymerization of the acid monomers and comonomers identified herein can be carried out in a mutual solvent for both, such as in a hydrocarbon solvent, whether aliphatic or aromatic, a lower alkanol of about 1 to 6 carbon atoms, or in water, with an effective amount of a free radical initiator sufficient to produce the desired composition within an acceptable period of time. The monomeric acid can be used as such or can be in a partially or a completely neutralized form prior to polymerization.

The reaction is conveniently carried out in

water as the only reaction medium at a temperature in the range of about 30°C to about 130°C usually at atmospheric, or slightly elevated pressure. The concentration of the polymer formed may range from about 20% to about 50% by weight, based on total solids, which solution can be shipped directly.

The polymer may also be formed in an acyclic ketone, such as acetone, or in an acyclic ester, such as ethyl acetate, in an alkanol, or in xylene or toluene. If, for example, the polymer is formed in an organic solvent, or a mixture of an organic solvent and water, the polymer is converted from the organic solvent solution to a water solution. Typically, the organic solvent is stripped from the solution with steam, or distilled off with subsequent additions of water and repetition of distillation to remove the solvent, followed by the addition of water and a neutralizing agent such as caustic solution, ammonia, a hydrazine, or a low-boiling primary, secondary or tertiary aliphatic amine.

The final aqueous solution of polymer salt is preferably in the range of about pH 2 to about pH 8, with a total solids content of about 2 to about 60% by weight, and preferably about 20 to about 50% by weight of polymer in water.

The polymers suitable herein have weight average molecular weight in the range of about 500 to about 100,000, and preferably about 1,000 to about 20,000, as determined by gel permeation chromatography. This determination is conventionally made according to ASTM method D-3536-76 by dissolving the esterified polymer in tetrahydrofuran and comparing it with a solution in THF of polystyrene of known molecular weight. The acid numbers of the polymers formed, as determined by a conventional titration with KOH, may range from about 310 to about 740,

corresponding to a weight fraction of from 40% to about 95% by weight of monomer units having COOH groups. The preferred polymers have more than 50% by weight of free carboxyl groups and an acid number in the range from about 390 to about 700.

In a typical polymerization process, a glass lined or stainless steel jacketed reactor is charged with predetermined amounts of monomers along with the polymerization catalyst under a nitrogen blanket, and the reaction mixture allowed to exotherm under controlled temperature conditions maintained by a heat-transfer fluid in the jacket of the reactor. The pressure under which the reaction occurs is not critical, it being convenient to carry it out under atmospheric pressure. A shortstop agent can be used to terminate the reaction at a predetermined conversion rate. Generally speaking, the polyacrylic acids and their salts can be prepared in a manner that is well known in the art.

The second essential component of the scale inhibition composition described herein is at least one phosphonocarboxylic acid defined by the following formulas I and II:

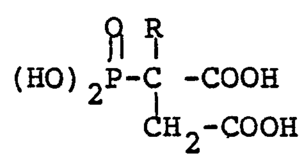
(I)

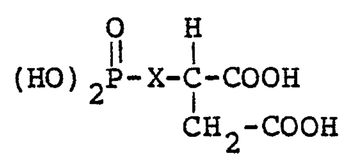
(II)

where R is hydrogen, alkyl, alkenyl, or alkinyl radical having 1 to 4 carbon atoms, an aryl, cycloalkyl, or aralkyl radical, or the radical selected from the following:

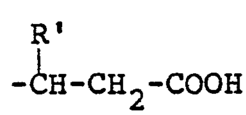
or
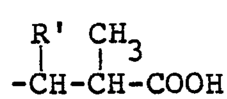

where R' is hydrogen, alkyl radical of 1 to 4 carbon atoms, or a carboxyl radical; and X is selected from the following:

```
 COOH          COOH    PO3H2   COOH           PO3H2
 |             |       |       |              |
-CH-CH2-,     -CH-,   -CH-,   -C-   , or     -C-
                               |              |
                               CH3            CH3
```

where the $-PO_3H_2$ group is the phosphono group

```
      O
      ||
(HO)2P-  .
```

Illustrative of specific phosphonocarboxylic acids include α-methylphosphonosuccinic acid, phosphonosuccinic acid, 1-phosphonopropane-2,3-dicarboxylic acid, 2-phosphonobutane-1,2,4-tricarboxylic acid, α-allyl-phosphonosuccinic acid, α-p-chlorophenylphosphonosuccinic acid, α-propargyl-phosphonosuccinic acid, α-benzyl-phosphonosuccinic acid, α-cyclohexyl-phosphonosuccinic acid, 2-phosphono-3-(α-methyl-carboxymethyl)-hexane-1,2,4 tricarboxylic acid, 2,2-diphosphono-butane-2,4-dicarboxylic acid, and the like. The preferred phosphonocarboxylic acid is 2-phosphonobutane-1,2,4-tricarboxylic acid.

The phosphonocarboxylic acids are also referred to herein as phosphonoalkane carboxylic acids that contain at least one and preferably one or two phosphono groups

```
      O
      ||
(HO)2P-    ,
```

at least two and preferably two or three carboxylic acid groups, with the main hydrocarbon chain containing

at least 2 and preferably 2 to 6 carbon atoms with substituents on the chain selected from alkyl, alkenyl, alkinyl, aryl, arylalkyl, alkaryl, and carboxylated and halogenated versions thereof. These acids and preparation thereof are described in U.S. patents 3,886,204, 3,886,205 and 4,026,815, all of which are incorporated by reference as if fully set forth herein.

The scale inhibiting composition described herein is used to treat water which contains calcium ions and sulfate ions. The threshold tests for calcium sulfate inhibition were carried out as follows: supersaturated solutions of 6,220 ppm $CaSO_4$ at a pH 7.0, or as otherwise indicated, and containing 0-3 ppm of inhibitor were prepared. Solutions were then stored in capped four-ounce jars and placed in a 66°C oven without agitation. After 24 hours, solutions were filtered through 0.22 micrometer filter paper and calcium analyzed by EDTA titrations. Synergistic results are also obtainable at acid pH as well, which is unexpected to one skilled in the art.

The percent threshold inhibition (TI) attained for each experiment is obtained using the following formula:

$$\%\ TI = \frac{(Ca)\ exp - (Ca)\ final}{(Ca)\ initial - (Ca)\ final} \times 100$$

where (Ca) exp = concentration of calcium ions in the filtrate in presence of the polymer at time 24 hours

(Ca) final = concentration of calcium ions in filtrate in absence of the polymer at time 24 hours

(Ca) initial = concentration of calcium ions at time zero.

EXAMPLE

This example demonstrates threshold inhibition of phosphonoalkane carboxylic acids, polyacrylic acids or salts thereof, and combinations of the two together, on calcium sulfate, at the indicated levels of the material. The tests were carried out in the manner indicated above for 24 hours to determine percent threshold inhibition of calcium sulfate. Results of these tests are given in Table I, below where phosphonocarboxylic acid is represented as PCA.

TABLE I

| Test No. | Polyacrylate solids (ppm) | PCA solids (ppm) | % TI of $CaSO_4$ |
|---|---|---|---|
| 1 | A-0 | - | 0 |
| 2 | A-0.50 | - | 9 |
| 3 | A-1.00 | - | 21 |
| 4 | A-1.25 | - | 31 |
| 5 | A-1.50 | - | 46 |
| 6 | A-1.75 | - | 58 |
| 7 | A-2.00 | - | 68 |
| 8 | - | 0.50 | 5 |
| 9 | - | 1.00 | 14 |
| 10 | - | 1.50 | 22 |
| 11 | - | 2.00 | 35 |
| 12 | - | 2.50 | 68 |
| 13 | A-0.25 | 1.00 | 91 |
| 14 | A-0.50 | 1.00 | 92 |
| 15 | A-0.75 | 1.00 | 95 |
| 16 | A-1.00 | 1.00 | 97 |
| 17 | A-1.00 | 0.25 | 42 |
| 18 | A-1.00 | 0.50 | 81 |
| 19 | A-1.00 | 0.75 | 93 |
| 20 | B-0.25 | - | 5 |
| 21 | B-1.25 | - | 63 |
| 22 | B-0.25 | 1.00 | 72 |

| | | | |
|---|---|---|---|
| 23 | C-1.00 | - | 4 |
| 24 | C-1.00 | 1.00 | 30 |
| 25 | D-1.00 | - | 29 |
| 26 | D-1.50 | - | 46 |
| 27 | D-2.00 | - | 96 |
| 28 | D-1.00 | 0.25 | 35 |
| 29 | D-1.00 | 0.50 | 83 |
| 30 | D-1.00 | 0.75 | 94 |
| 31 | D-0.25 | 1.00 | 89 |
| 32 | D-0.50 | 1.00 | 94 |
| 33 | D-0.75 | 1.00 | 97 |
| 34 | E-1.00 | - | 9 |
| 35 | E-2.00 | - | 26 |
| 36 | E-1.00 | 1.00 | 63 |
| 37 | B-15.0 | - | 33 |
| 38 | B-12.0 | 3.0 | 72 |
| 39 | B-0 | 15.0 | 13 |

In the above table, the phosphonocarboxylic acid was 2-phosphonobutane-1,2,4-tricarboxylic acid. Polyacrylate A was K-732, a commercially available polyacrylic acid from The BFGoodrich Company in the form of an aqueous solution containing 50% total solids, pH of 1.5 to 2, with a viscosity of 140 to 340 cps at 25°C, and with a molecular weight of about 5,100. Polyacrylate B was K-752, also an aqueous solution of polyacrylic acid available in commerce from The BFGoodrich Company with total solids of 65%, pH of 1.5 to 2, viscosity at 25°C of 300 to 1,300 cps, and molecular weight of about 2,100. Polyacrylate C was K-722, likewise, a commercially available aqueous solution from The BFGoodrich Company with total solids of 50%, pH of 1.5 to 2, viscosity at 25°C of 5,000 to 15,000 cps, and molecular weight of about 104,000. Polyacrylate D was a copolymer of acrylic acid and methacrylic acid, on a 2/1 weight basis. Polyacrylate

E was an experimental polyacrylic acid with a molecular weight of about 10,000. Molecular weights given herein are weight average molecular weights. Experiments 1 to 36 were carried out a pH of 7.0 whereas experiments 37 to 39 were carried out at pH of 3.6. Also Experiments 37 to 39 were carried out at 10,640 ppm $CaSO_4$ in the presence of 17,500 ppm NaCl at 30°C, instead of 6,200 ppm $CaSO_4$ at 66°C. Performance of these materials in acidic environment was totally unpredictable.

The data in Table I demonstrates relative ineffectiveness of either the phosphonocarboxylic acid or the polyacrylic acids when used alone for inhibiting precipitation of calcium sulfate. At a level of 1 ppm of polyacrylic acid A alone, threshold inhibition was only 21% which increased to 68% at a level of 2 ppm of the polyacrylic acid A. Considering that threshold inhibition of 60% is acceptable and the fact that threshold inhibition of 80% is considered to be good, it should be apparent that even at a level of 2 ppm of polyacrylic acid A, the 68% threshold inhibition is not a great achievement. Same conclusion applies to polyacrylic acid B. Results with polyacrylic acid C were not encouraging due probably to the fact that its molecular weight was about 104,000, which appears to be outside the optimum effectiveness for calcium sulfate inhibition.

The copolymer of acrylic acid and methacrylic acid, identified as Polyacrylate D, in Table I, above, yielded threshold inhibition of 29% when used alone at 1.00 ppm level but increased to a surprising 96% at 2.00 ppm level.

The phosphonocarboxylic acid alone was, likewise, a disappointing performer in terms of calcium sulfate scale inhibition. At 1 ppm of the phosphonocarboxylic acid, threshold inhibition was only 14% which increased to 35% at a 2 ppm level and to 68%

at 2.5 ppm level. At these levels, therefore, the phosphonocarboxylic acid alone does not provide the desired effectiveness for inhibiting calcium sulfate precipitation or crystallization.

The synergistic results for calcium sulfate scale inhibition are clearly evident when both a phosphonocarboxylic acid and a polyacrylate were used. Whereas 1 ppm of the phosphonocarboxylic acid alone yielded only 14% threshold inhibition, the use in conjunction thereof of only 0.25 ppm of polyacrylic acid A increased theshold inhibition all the way up to 91% and at 1 ppm of each, threshold inhibition of 97% was reached. Similar synergism is evident when the phosphonocarboxylic acid was used in conjunction with the other polyacrylates.

CLAIMS

1. Method for inhibiting precipitation of calcium sulfate in an aqueous system comprising the steps of adding to the aqueous system an effective threshold inhibition amount of at least one polymeric acid or its salt and at least one phosphonocarboxylic acid wherein the relative proportion of the active materials is in the range of about 0.05 to 10 weight parts of said polymeric acid or its salt per 1 weight part of said phosphonocarboxylic acid, said polymeric acid being a polymer of at least one monounsaturated monocarboxylic acid or its salt containing 3 to 4 carbon atoms and having molecular weight in the range of about 500 to 100,000, and said phosphonocarboxylic acid containing at least one phosphono group, at least two carboxylic acid groups, and a hydrocarbon chain of at least two carbon atoms.

2. Method of Claim 1 wherein said aqueous system is selected from reverse osmosis, flash distillation, petroleum industry, pulp digester, phosphoric acid production, and sugar evaporation water system.

3. Method of Claim 1 wherein amount of said materials added to the aqeuous system is in the range of about 0.5 to 200 ppm.

4. Method of Claim 3 wherein the relative proportion of said polymeric acid or its salt to said phosphonocarboxylic acid is in the range providing synergistic results in terms of threshold inhibition of calcium sulfate.

5. Method of Claim 4 wherein said polymeric acid or its salt contains up to about 35% by weight of other polymerized comonomers.

6. Method of Claim 4 wherein said polymeric acid or its salt contains up to about 10% by weight of other polymerized comonomers, and said polymeric acid

or its salt is water-soluble.

7. Method of Claim 6 wherein said aqueous system is selected from reverse osmosis and flash distillation water systems; wherein the relative proportion of said materials is in the range of about 0.1 to 5 weight parts of said polymeric acid or its salt per 1 weight part of said phosphonocarboxylic acid.

8. Method of Claim 7 wherein molecular weight of said polymeric acid is in the range of about 1,000 to 20,000.

9. Method of Claim 7 wherein said polymeric acid or its salt is a polymer of an acid selected from acrylic acid, methacrylic acid, and mixtures of said acids.

10. Method of Claim 8 wherein said polymeric acid is selected from homopolymers of acrylic acid and copolymers of acrylic acid and methacrylic acid wherein the relative weight ratio of acrylic acid predominates, and wherein said materials attain threshold inhibition of at least 80%.

11. Method of Claim 10 wherein amount of said materials added to an aqueous system is 1 to 10 ppm.

12. Method of Claim 10 wherein said phosphonocarboxylic acid is defined by the following structural formulas I and II:

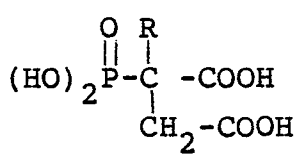
(I)

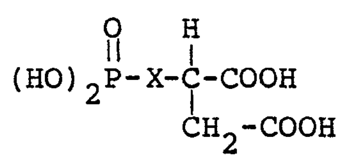
(II)

where R is selected from hydrogen; alkyl, alkenyl, and alkinyl groups containing 1 to 4 carbon atoms; aryl groups; aralkyl groups; cycloalkyl groups; and

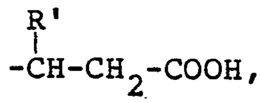, and 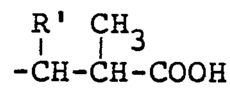

groups where R' is selected from hydrogen, alkyl groups of 1 to 4 carbon atoms, and carboxyl groups, and X is selected from the following groups:

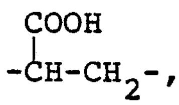, 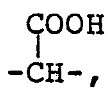, 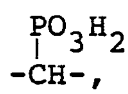, 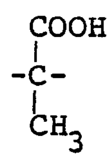 , and 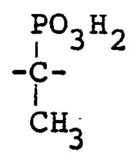

where the $-PO_3H_2$ moiety is the phosphono group 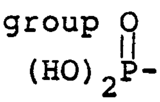 .

13. Method of Claim 10 wherein said phosphonocarboxylic acid is 2-phosphonobutane-1,2,4-tricarboxylic acid.

14. Method of Claim 13 wherein said aqueous system is alkaline.